# EUROPEAN PATENT APPLICATION

(11) **EP 3 981 832 A1**
(43) Date of publication of application: **13.04.2022**
(21) Application number: 20818705.4
(22) Date of filing: 04.06.2020
(51) Int. Cl.: C08L 33/14, B32B 17/10, B32B 27/30, B32B 27/40, C03C 17/32, C03C 27/12, C08F 20/26, C08L 75/04

(54) **RESIN COMPOSITION, RESIN FILM, AND GLASS LAMINATE**

(30) Priority: 07.06.2019 JP 2019107376
(71) Applicant: SEKISUI CHEMICAL CO., LTD., Osaka-shi Osaka 530-8565 (JP)
(72) Inventor: HIGASHIONNA, Yui, Mishima-gun, Osaka 618-0021 (JP); OOHIGASHI, Yuji, Mishima-gun, Osaka 618-0021 (JP)
(74) Representative: Ter Meer Steinmeister & Partner
(86) International application number: PCT/JP2020/022211
(87) International publication number: WO 2020/246562

(57) **Abstract**

The resin composition of the present invention is a resin composition comprising an acrylic-based polymer (A) and a urethane polymer (B), in which the acrylic-based polymer (A) is a polymer of a monomer component comprising an acrylic-based monomer (A1) having at least one functional group (X) selected from the group consisting of a hydroxy group, a carboxy group, a thiol group, an amino group, a group having an ether bond, a group having a urethane bond and a group having an amide bond.

## Description

### Technical Field

The present invention relates to a resin composition, a resin film formed of a resin composition, and a glass laminate comprising a resin film, such as laminated glass.

### Background Art

Urethane resins and acrylic resins can allow transparency to be increased, and thus are studied for use in interlayer films for laminated glass. Such an interlayer film for laminated glass is placed between two glass plates and used in order to integrate the resultant as laminated glass. Urethane resins and acrylic resins are also studied for use in applications where transparency is required, for example, optical adhesive, optical pressure-sensitive adhesives, transparent protective films, films for optical members, and external preparations for cosmetics and the like, in addition to interlayer films for laminated glass.

Urethane resins and acrylic resins have been conventionally studied to be mixed and used in order to impart various functions. For example, PTL 1 discloses a resin film comprising an acrylic-based polymer comprising at least nitrogen-containing monomer as a monomer unit, and a crosslinked urethane polymer, in which a sea-island structure is formed by the acrylic-based polymer and the urethane polymer. The resin film is indicated to not only be excellent in transparency, heat resistance, weather resistance, strength and flexibility, but also have self-restoring ability for self-restoring due to heating.

For example, PTL 2 discloses a resin particle comprising a (meth)acrylic-based polymer containing no active hydrogen, and a urethane polymer, in which a phase separation structure is formed from these polymers. The resin particle disclosed in PTL 2 is indicated to be excellent in soft-focus effect without any loss in slipping ability and transparent feeling, due to adjustment so that the refractive index of the resin in each phase satisfies a predetermined relationship, and to be suitably used in external preparations for cosmetics and the like.

### Citation List

### Patent Literature

PTL 1: JP 2015-160866 A
PTL 2: JP 2017-066306 A

### Summary of Invention

### Technical Problem

However, films and the like using acrylic resins are excellent in transparency, but have a difficulty in having improved strength and flexibility. In this regard, films and the like formed from urethane resins relatively easily impart flexibility and strength, but have the problem of being deteriorated in transparency over time. Such deterioration in transparency over time is caused also in a case of combination use of the acrylic resin and the urethane resin described in PTLs 1 and 2, and it is thus difficult even by use of a resin composition comprising both the acrylic-based polymer and the urethane polymer to not only improve flexibility and strength, but also improve transparency over a long period.

An object of the present invention is then to allow various resin constructs such as a resin film formed of a resin composition comprising an acrylic-based polymer and a urethane polymer to be not only improved in flexibility and strength, but also improved in transparency over a long period.

### Solution to Problem

The present inventors have made intensive studies, and as a result, have found that the above problems can be solved by a resin composition comprising an acrylic-based polymer and a urethane polymer, the acrylic-based polymer being a polymer of a monomer component comprising an acrylic-based monomer (A1) having a specified functional group, thereby completing the following present invention. That is, the present invention provides the following [1] to [20].
[1] A resin composition comprising an acrylic-based polymer (A) and a urethane polymer (B),
   the acrylic-based polymer (A) being a polymer of a monomer component comprising an acrylic-based monomer (A1) having at least one functional group (X) selected from the group consisting of a hydroxy group, a carboxy group, a thiol group, an amino group, a group having an ether bond, a group having a urethane bond and a group having an amide bond.
[2] The resin composition according to [1], wherein [1], wherein a mass rate (A/B) of the acrylic-based polymer (A) to the urethane polymer (B) is 1/5 or more and 10/1 or less.
[3] The resin composition according to [1] or [2], wherein an amount of the acrylic-based monomer (A1) compounded is 1 part by mass or more based on 100 parts by mass of the monomer component forming the acrylic-based polymer (A).
[4] The resin composition according to any one of [1] to [3], wherein a phase separation structure is formed by the acrylic-based polymer (A) and the urethane polymer (B).
[5] The resin composition according to any one of [1] to [4], wherein a total content of the acrylic-based polymer (A) and the urethane polymer (B) is 90% by mass or more based on a total amount of a resin comprised in the resin composition.
[6] The resin composition according to any one of [1] to [5], wherein a glass transition temperature (Tg) of the acrylic-based polymer (A) is 50°C or less.
[7] The resin composition according to any one of [1] to [6], wherein the acrylic-based monomer (A1) comprises at least one selected from the group consisting of an acrylic-based monomer (A1) having a hydroxy group, an acrylic-based monomer (A1) having a carboxy group, an ether bond-containing acrylic-based monomer (A1), and a urethane bond-containing acrylic-based monomer (A1).
[8] The resin composition according to any one of [1] to [7], wherein the acrylic-based monomer (A1) comprises an acrylic-based monomer (A1) having a hydroxy group or an acrylic-based monomer (A1) having a carboxy group.
[9] The resin composition according to [7] or [8], wherein the acrylic-based monomer (A1) having a hydroxy group is a hydroxyalkyl (meth)acrylate, the acrylic-based monomer (A1) having a carboxy group is at least one selected from the group consisting of acrylic acid, methacrylic acid and ω-carboxy-polycaprolactone mono(meth)acrylate, the acrylic-based monomer (A1) having an ether bond is a cyclic ether group-containing (meth)acrylate, and the acrylic-based monomer (A1) having a urethane bond is 1,2-ethanediol-1-(meth)acrylate 2-(N-butylcarbamate).
[10] The resin composition according to any one of [1] to [9], wherein the monomer component further comprises a monofunctional acrylic-based monomer (A2) having no functional group (X), and the acrylic-based monomer (A2) comprises at least one selected from the group consisting of alkyl (meth)acrylate, alicyclic structure-containing (meth)acrylate and aromatic ring-containing (meth)acrylate.
[11] The resin composition according to any one of [1] to [10], wherein the monomer component comprises a monofunctional acrylic-based monomer (A2) having no functional group (X), and the acrylic-based monomer (A2) comprises alkyl (meth)acrylate.
[12] The resin composition according to [11], wherein the acrylic-based monomer (A2) further comprises one of or both aromatic ring-containing (meth)acrylate and alicyclic structure-containing (meth)acrylate.
[13] The resin composition according to any one of [1] to [12], wherein the urethane polymer (B) is thermoplastic polyurethane.
[14] The resin composition according to any one of [1] to [13], wherein the urethane polymer (B) is aliphatic polyurethane.
[15] The resin composition according to any one of [1] to [14], wherein the urethane polymer (B) is a reaction product of a polyisocyanate compound and a polyol compound, and the polyol compound comprises polyether polyol.
[16] The resin composition according to any one of [1] to [15], wherein a weight-average molecular weight of the urethane polymer (B) is 30000 or more and 1000000 or less.
[17] A resin film formed of the resin composition according to any one of [1] to [16].
[18] The resin film according to [17], having a thickness of 250 µm or more and 900 µm or less.
[19] A glass laminate comprising the resin film according to [17] or [18], and a glass member selected from the group consisting of inorganic glass and organic glass, wherein the resin film is provided on a surface of the glass member.
[20] A glass laminate comprising the resin film according to [17] or [18], and a pair of opposed glass members each selected from the group consisting of any of inorganic glass and organic glass, wherein the resin film is placed between the pair of glass members.

### Advantageous Effects of Invention

The present invention can allow various resin constructs such as a resin film formed of a resin composition comprising a urethane resin and an acrylic resin to be not only improved in flexibility and strength, but also improved in transparency over a long period.

### Description of Embodiments

### [Resin composition]

Hereinafter, the present invention is described in detail with reference to embodiments. The resin composition of the present invention comprises an acrylic-based polymer (A) and a urethane polymer (B).

### <Acrylic-based polymer (A)>

The acrylic-based polymer (A) for use in the present invention is a polymer of a monomer component comprising an acrylic-based monomer (A1) having at least one functional group (X) selected from the group consisting of a hydroxy group, a carboxy group, a thiol group, an amino group, a group having an ether bond, a group having a urethane bond, and a group having an amide bond. The resin composition of the present invention easily ensures transparency over a long period, due to use of such an acrylic-based monomer (A1) having a functional group (X). The principle of this, although not clear, is presumed as follows.

The functional group (X) has hydrogen bond property, or has an oxygen atom or a nitrogen atom to which a hydrogen atom is coordinated, thus the acrylic-based polymer (A) is bound to water by a hydrogen bond or the like, to thereby prevent water entering from the outside, from being aggregated in the resin composition, and prevent the urethane polymer (B) from being hydrolyzed, and thus an increase in haze based on aggregation of water and an increase in haze based on hydrolysis of the urethane polymer (B) can be prevented, to enable transparency to be ensured over a long period.

The acrylic-based monomer (A1) having the functional group (X) in the acrylic-based polymer (A) may be used singly or in combinations of two or more kinds thereof. The acrylic-based monomer (A1) may have only one kind of the functional group (X), or two or more kinds thereof.

The functional group (X) is, among these described above, preferably at least one selected from the group consisting of a hydroxy group, a carboxy group, an amino group, a group having an ether bond, a group having a urethane bond and a group having an amide bond. Among these, at least one selected from the group consisting of a hydroxy group, a carboxy group, a group having an ether bond, and a group having a urethane bond is more preferable, and at least one selected from the group consisting of a hydroxy group and a carboxy group is particularly preferable. At least any of a hydroxy group and a carboxy group is used as the functional group (X), to thereby enable hydrolysis of the urethane polymer (B) and aggregation of water to be more effectively prevented, and allow transparency to be excellent over a long period.

The acrylic-based monomer (A1) is a compound having a (meth)acryloyl group, in addition to the functional group (X), and is preferably a monofunctional monomer having one (meth)acryloyl group.

Specific examples of the acrylic-based monomer (A1) having a hydroxy group include hydroxyalkyl (meth)acrylates such as 2-hydroxyethyl (meth)acrylate, 3-hydroxypropyl (meth)acrylate, and 4-hydroxybutyl (meth)acrylate, and phthalic acid ester-based compounds such as 2-acryloyloxyethyl-2-hydroxypropylphthalate and 2-methacryloyloxyethyl-2-hydroxylpropylphthalate. Among these, hydroxyalkyl (meth)acrylate is preferable. The number of carbon atoms in a hydroxyalkyl group in such hydroxyalkyl (meth)acrylate is not particularly limited, and is, for example, 1 to 6, preferably 2 to 4. Such hydroxyalkyl (meth)acrylate is preferably hydroxyalkyl acrylate from the viewpoint of, for example, a decrease in glass transition temperature of the acrylic-based polymer (A).

Herein, the "(meth)acryloyl group" means an acryloyl group or a methacryloyl group, the "(meth)acrylate" means acrylate or methacrylate, and much the same is true on other similar terms.

Examples of the acrylic-based monomer (A1) having a carboxy group include acrylic acid, methacrylic acid, ω-carboxy-polycaprolactone mono(meth)acrylate. The number of repeating units of polycaprolactone in ω-carboxy-polycaprolactone mono(meth)acrylate is about 2 to 5, and is preferably 2 to 3. Such a carboxyl group-containing acrylic-based monomer is preferably ω-carboxy-polycaprolactone mono(meth)acrylate.

Examples of the acrylic-based monomer (A1) (ether bond-containing acrylic-based monomer) where the functional group (X) is a group having an ether bond include cyclic ether group-containing (meth)acrylate. The cyclic ether group-containing (meth)acrylate here used is one having an epoxy ring, an oxetane ring, a tetrahydrofuran ring, a dioxorane ring, or a dioxane ring. Among these, (meth)acrylate containing an epoxy ring or a dioxorane ring is preferable, and dioxorane ring-containing (meth)acrylate is particularly preferable, from the viewpoint of, for example, an adhesion force to glass.

Examples of the epoxy ring-containing (meth)acrylate include glycidyl (meth)acrylate, 2-hydroxyethyl (meth)acrylate glycidyl ether, 3-hydroxypropyl (meth)acrylate glycidyl ether, 4-hydroxybutyl acrylate glycidyl ether, 5-hydroxypentyl (meth)acrylate glycidyl ether, and 6-hydroxyhexyl (meth)acrylate glycidyl ether.

Examples of the oxetane ring-containing (meth)acrylate include (3-methyloxetan-3-yl)methyl (meth)acrylate, (3-propyloxetan-3-yl)methyl (meth)acrylate, (3-ethyloxetan-3-yl)methyl (meth)acrylate, (3-butyloxetan-3-yl)methyl (meth)acrylate, (3-ethyloxetan-3-yl)ethyl (meth)acrylate, (3-ethyloxetan-3-yl)propyl (meth)acrylate, (3-ethyloxetan-3-yl)butyl (meth)acrylate, (3-ethyloxetan-3-yl)pentyl (meth)acrylate, and (3-ethyloxetan-3-yl)hexyl (meth) acrylate.

Examples of the tetrahydrofuran ring-containing (meth)acrylate include tetrahydrofurfuryl (meth)acrylate, γ-butyrolactone (meth)acrylate, and a multimer ester of tetrahydrofurfuryl alcohol and acrylic acid.

Examples of the dioxorane ring-containing (meth)acrylate include (2-methyl-2-ethyl-1,3-dioxoran-4-yl)methyl (meth)acrylate, (2,2-cyclohexyl-1,3-dioxoran-4-yl)methyl (meth)acrylate, (2,2-dimethyl-1,3-dioxoran-4-yl)methyl (meth)acrylate, and (2-methyl-2-isobutyl-1,3-dioxoran-4-yl)methyl (meth)acrylate.

Examples of the dioxane ring-containing (meth)acrylate include (5-ethyl-1,3-dioxan-5-yl)methyl (meth)acrylate.

The ether bond-containing acrylic-based monomer may be polyoxyalkylene-containing (meth)acrylate, and examples include polyethylene glycol monoalkyl ether (meth)acrylates such as diethylene glycol monoethyl ether (meth)acrylate and polyethylene glycol monoethyl ether (meth)acrylate (the number of repeating units of ethylene glycol is, for example, 3 to 20), and polypropylene glycol monoalkyl ether (meth)acrylates.

The ether bond-containing acrylic-based monomer may be alkoxy-containing (meth)acrylates such as 3-methoxybutyl (meth)acrylate.

The ether bond-containing acrylic-based monomer is preferably cyclic ether group-containing (meth)acrylate, and a suitable specific example of the cyclic ether group-containing (meth)acrylate is glycidyl (meth)acrylate or (2-methyl-2-ethyl-1,3-dioxoran-4-yl)methyl (meth)acrylate. Among these, (2-methyl-2-ethyl-1,3-dioxoran-4-yl)methyl (meth)acrylate is more preferable.

Examples of the acrylic-based monomer (A1) (urethane bond-containing acrylic-based monomer) where the functional group (X) is a group having a urethane bond include 1,2-ethanediol-1-(meth)acrylate 2-(N-butylcarbamate).

Examples of the acrylic-based monomer (A1) containing an amino group include N,N-dimethylaminoethyl (meth)acrylate, N,N-dimethylaminoethyl(meth) methacrylate, and N,N-diethylaminoethyl (meth)acrylate.

Examples of the acrylic-based monomer (A1) (amide bond-containing acrylic-based monomer) where the functional group (X) is a group having an amide bond include N,N-dimethyl(meth)acrylamide, N-isopropyl(meth)acrylamide, N,N-diethyl(meth)acrylamide, and N-hydroxy ethyl (meth) acrylamide.

The acrylic-based monomer (A1) may also be a polyfunctional monomer having two or more (meth)acryloyl groups. Specific examples include pentaerythritol tri(meth)acrylate, dipentaerythritol penta(meth)acrylate, tetramethylolmethane tri(meth)acrylate, diethylene glycol di(meth)acrylate, triethylene glycol di(meth)acrylate, tetraethylene glycol di(meth)acrylate, dipropylene glycol di(meth)acrylate, tripropylene glycol di(meth)acrylate, and tetrapropylene glycol di(meth)acrylate.

The acrylic-based monomer (A1) having the functional group (X) is compounded, for example, in an amount of 1 part by mass or more based on 100 parts by mass of the monomer component forming the acrylic-based polymer (A). With the amount compounded of 1 part by mass or more, the effect due to comprising of the acrylic-based monomer (A1) can be exerted and transparency can be prevented from being deteriorated over time. The amount of the acrylic-based monomer (A1) compounded is preferably 10 parts by mass or more, more preferably 15 parts by mass or more, from the viewpoint of ensuring of transparency over a long period.

An acrylic-based monomer (A2) having no functional group (X) described below is preferably used in a certain amount, for example, from the viewpoint of a decrease in difference in refractive index between the acrylic-based polymer (A) and the urethane polymer (B) and from the viewpoint of adjustment of the glass transition temperature (Tg) of the acrylic-based polymer (A) in a desired range. Thus, the amount of the acrylic-based monomer (A1) compounded is preferably 75 parts by mass or less, more preferably 60 parts by mass or less, further preferably 50 parts by mass or less based on 100 parts by mass of the monomer component forming the acrylic-based polymer (A).

In the present invention, the acrylic-based monomer (A1) having a hydroxy group or the acrylic-based monomer (A1) having a carboxy group is more preferably used, as described above. In a case where the acrylic-based monomer (A1) having a hydroxy group is used, the amount of the acrylic-based monomer (A1) having a hydroxy group compounded may be, for example, 1 part by mass or more based on 100 parts by mass of the monomer component forming the acrylic-based polymer (A), and is preferably 10 parts by mass or more, more preferably 15 parts by mass or more from the viewpoint of ensuring of transparency over a long period. The amount of the acrylic-based monomer (A1) having a hydroxy group compounded is further preferably 30 parts by mass or more, still further preferably 35 parts by mass or more from the viewpoint of allowing transparency to be more excellent. The upper limit value of the amount of the acrylic-based monomer (A1) having a hydroxy group compounded is not particularly limited as long as the total amount of the acrylic-based monomer (A1) compounded is adjusted to be equal to or less than the upper limit value, and is preferably 60 parts by mass, further preferably 50 parts by mass.

In a case where the acrylic-based monomer (A1) having a carboxy group is used, the amount of the acrylic-based monomer (A1) having a carboxy group compounded may be, for example, 1 part by mass or more based on 100 parts by mass of the monomer component forming the acrylic-based polymer (A), and is preferably 10 parts by mass or more from the viewpoint of ensuring of transparency over a long period. The amount of the acrylic-based monomer (A1) having a carboxy group compounded is more preferably 18 parts by mass or more from the viewpoint of allowing transparency to be more excellent. The upper limit value of the amount of the acrylic-based monomer (A1) having a carboxy group compounded is not particularly limited as long as the total amount of the acrylic-based monomer (A1) compounded is adjusted to be equal to or less than the upper limit value, and is preferably 50 parts by mass, further preferably 30 parts by mass.

As described above, the acrylic-based polymer (A) is preferably a polymerized product of a monomer component comprising an acrylic-based monomer (A2) having no functional group (X), in addition to the acrylic-based monomer (A1).

The acrylic-based monomer (A2) here used is preferably a monofunctional monomer having one (meth)acryloyloxy group. Examples of the acrylic-based monomer (A2) include alkyl (meth)acrylate, alicyclic structure-containing (meth)acrylate, and aromatic ring-containing (meth)acrylate. Such a monomer may be used singly or in combinations of two or more kinds thereof.

In the present invention, use of the acrylic-based monomer (A2) easily allows to minimize difference in refractive index between the acrylic-based polymer (A) and the urethane polymer (B). Thus, reflection and refraction barely occur at an interface between phases in a phase separation structure described below, and transparency is easily enhanced. The glass transition temperature (Tg) is also easily adjusted in a desired range.

Examples of the alkyl (meth)acrylate include alkyl (meth)acrylate having 1 to 18 carbon atoms. Specific examples include methyl (meth)acrylate, ethyl (meth)acrylate, n-butyl (meth)acrylate, isobutyl (meth)acrylate, tert-butyl (meth)acrylate, n-pentyl (meth)acrylate, n-hexyl (meth)acrylate, n-octyl (meth)acrylate, isooctyl (meth)acrylate, 2-ethylhexyl (meth)acrylate, isodecyl (meth)acrylate, lauryl (meth)acrylate, myristyl (meth)acrylate, isomyristyl (meth)acrylate, stearyl (meth)acrylate, and isostearyl (meth)acrylate. Among these, alkyl (meth)acrylate whose alkyl group has 1 to 12 carbon atoms is preferable, and alkyl acrylate whose alkyl group has 1 to 12 carbon atoms is more preferable and alkyl acrylate whose alkyl group has 1 to 8 carbon atoms is further preferable, from the viewpoint of allowing the glass transition temperature (Tg) to be easily adjusted in a desired range.

Examples of the alicyclic structure-containing (meth)acrylate include cyclohexyl (meth)acrylate, isobornyl (meth)acrylate, and dicyclopentanyl (meth)acrylate. Examples of the aromatic ring-containing (meth)acrylate include benzyl (meth)acrylate.

The acrylic-based monomer (A2) here used may also be a polyfunctional monomer having two or more (meth)acryloyloxy groups. Examples of such a polyfunctional monomer include trimethylolpropane tri(meth)acrylate, pentaerythritol tetra(meth)acrylate, dipentaerythritol hexa(meth)acrylate, tetramethylolpropane tetra(meth)acrylate, ethylene glycol di(meth)acrylate, propylene glycol di(meth)acrylate, 1,6-hexanediol di(meth)acrylate, 1,9-nonanediol di(meth)acrylate, neopentyl glycol di(meth)acrylate, and 1,3-butylene glycol di(meth)acrylate.

The acrylic-based monomer (A2) is preferably compounded in an amount of 25 parts by mass or more, more preferably 40 parts by mass or more, further preferably 50 parts by mass or more based on 100 parts by mass of the monomer component forming the acrylic-based polymer (A), for example, from the viewpoint of easy adjustment of the glass transition temperature and from the viewpoints of a decrease in difference in refraction relative to the urethane polymer (B) and an enhancement in transparency. The acrylic-based monomer (A2) is compounded in an amount of, for example, 99 parts by mass or less, preferably 96 parts by mass or less, more preferably 88 parts by mass or less, further preferably 82 parts by mass or less based on 100 parts by mass of the monomer component forming the acrylic-based polymer (A) in order to allow a constituent unit derived from the acrylic-based monomer (A1) to be comprised in a certain amount or more.

Alkyl (meth)acrylate is preferably used as the acrylic-based monomer (A2). In other words, the monomer component forming the acrylic-based polymer (A) preferably comprises the acrylic-based monomer (A1) having the functional group (X) and alkyl (meth)acrylate. Use of alkyl (meth)acrylate allows the glass transition temperature (Tg) to be easily adjusted in a desired range. Such alkyl (meth)acrylate is particularly preferably alkyl acrylate, as described above.

The amount of the alkyl (meth)acrylate forming the acrylic-based polymer (A), compounded, is preferably 25 parts by mass 80 parts by mass or less, more preferably 30 parts by mass or more and 70 parts by mass or less, further preferably 35 parts by mass or more and 60 parts by mass or less based on 100 parts by mass of the monomer component forming the acrylic-based polymer (A).

At least one of aromatic ring-containing (meth)acrylate and alicyclic structure-containing (meth)acrylate, in addition to the alkyl (meth)acrylate, is preferably comprised and both thereof are further preferably comprised in the acrylic-based monomer (A2).

The total content of the aromatic ring-containing (meth)acrylate and the alicyclic structure-containing (meth)acrylate is preferably 8 parts by mass or more and 45 parts by mass or less, more preferably 12 parts by mass or more and 40 parts by mass or less, further preferably 18 parts by mass or more and 30 parts by mass or less based on 100 parts by mass of the monomer component forming the acrylic-based polymer (A).

The monomer component forming the acrylic-based polymer (A) may comprises a vinyl monomer other than the components (A1) and (A2), in addition to the component (A1), or the components (A1) and (A2).

The glass transition temperature (Tg) of the acrylic-based polymer (A) is preferably 50°C or less. With the glass transition temperature (Tg) of the acrylic-based polymer (A) of 50°C or less, the resin composition can be easily improved in adhesiveness to other member such as glass. In the case of use in lamination on glass or the like and even in the case of contraction of the glass or the like due to the change in temperature of the glass, stress occurring due to such contraction is easily relaxed, and, in the case of use for a glass laminate such as laminated glass, the occurrence of warpage can be prevented.

The glass transition temperature (Tg) of the acrylic-based polymer (A) is more preferably 19°C or less, further preferably 5°C or less, still further preferably -5°C or less, from the viewpoints of enhancements in adhesiveness and stress relaxation characteristics. The glass transition temperature (Tg) of the acrylic-based polymer (A) is preferably -50°C or more, more preferably -40°C or more, further preferably -35°C or more from the viewpoints of adhesiveness and the like.

The glass transition temperature (Tg) can be determined with detection by performing viscoelasticity measurement with a dynamic viscoelasticity measurement apparatus to measure the shear storage elastic modulus and read the peak temperature at a loss tangent tan δ. The shear storage elastic modulus may be measured in conditions of, for example, a shear mode, a rate of temperature rise of 5°C/min, a measurement frequency of 1 Hz, and a strain of 1%.

The glass transition temperature (Tg) may be measured by performing viscoelasticity measurement of a single acrylic-based polymer (A).

In a case where the glass transition temperature (Tg) of the acrylic-based polymer (A) is measured with the resin composition, the acrylic-based polymer (A) may be separated from the resin composition and the glass transition temperature (Tg) may be measured. In a case where no separation can be made, the monomer component forming the acrylic-based polymer (A), comprised in the resin composition, and the component rate may be identified by GC-MS, NMR, and/or the like. An acrylic-based polymer may be synthesized with the monomer component at the rate, and the glass transition temperature of such an acrylic-based polymer may be measured and defined as the glass transition temperature (Tg) of the acrylic-based polymer (A).

### <Urethane polymer (B)>

In the present invention, the resin composition comprises the urethane polymer (B) in addition to the acrylic-based polymer (A), to thereby enable a resin construct such as a resin film including the resin composition to be improved in flexibility, mechanical strength, and the like. The urethane polymer (B) is polyurethane obtained by a reaction of a polyisocyanate compound and a polyol compound. The polyurethane is preferably thermoplastic polyurethane (TPU).

Examples of the polyisocyanate compound include an aromatic polyisocyanate compound and an aliphatic polyisocyanate compound.

Examples of the aromatic polyisocyanate compound include diphenylmethane diisocyanate, a liquid modified product of diphenylmethane diisocyanate, polymeric MDI, tolylene diisocyanate, and naphthalene-1,5-diisocyanate.

Examples of the aliphatic polyisocyanate compound include hexamethylene diisocyanate, trimethylhexamethylene diisocyanate, lysine diisocyanate, norbornane diisocyanate, trans-cyclohexane-1,4-diisocyanate, isophorone diisocyanate, hydrogenated xylylene diisocyanate, hydrogenated diphenylmethane diisocyanate, cyclohexane diisocyanate, bis(isocyanatomethyl)cyclohexane, and dicyclohexylmethane diisocyanate.

The polyisocyanate compound here used is preferably difunctional. The polyisocyanate compound may be used singly or in combinations of two or more kinds thereof.

The polyol compound here used can be a known polyol compound commonly used for polyurethane production, and examples include polyester polyol, polyether polyol, polyalkylene polyol, and polycarbonate polyol. Such a polyol compound may be used singly or in combinations of two or more kinds thereof. Among these, polyether polyol is preferable. Use of polyether polyol barely causes hydrolysis, and easily allows optical characteristics to be favorably kept over a long period. The polyol compound here used is preferably a diol compound.

Preferable specific examples of the polyether polyol include polyoxyalkylene polyol. Examples of the polyoxyalkylene polyol include respective ring-opening polymerized products of ethylene oxide, propylene, tetrahydrofuran, 3-methyltetrahydrofuran, and the like. Two or more of such polyols may be used and thus be in the form of a random copolymer or a block copolymer. The initiator in obtaining of such a polyol by ring-opening polymerization is not particularly limited, and examples thereof include aliphatic polyhydric alcohols such as ethylene glycol, propylene glycol, diethylene glycol, dipropylene glycol, 1,4-butanediol, 1,3-butanediol, 1,6-hexanediol, neopentyl glycol, cyclohexylene glycol, and cyclohexane dimethanol.

Specific examples of the polyoxyalkylene polyol include polyethylene glycol, polypropylene glycol, and polytetramethylene ether glycol (PTMEG), and among these, polytetramethylene ether glycol is preferable.

The weight-average molecular weight of the polyol compound is not particularly limited, and is, for example, 200 or more and 8000 or less, preferably 400 or more and 5000 or less, further preferably 500 or more and 4000 or less. The weight-average molecular weight of the polyol compound is herein a weight-average molecular weight in terms of standard polystyrene as measured by gel permeation chromatography (GPC).

The urethane polymer (B) is preferably aliphatic polyurethane. In other words, preferably, the isocyanate compound here used is an aliphatic isocyanate compound and the polyol compound here used is also an aliphatic polyol compound. Use of aliphatic polyurethane barely causes yellowing of the resin composition over time, and enables excellent transparency to be ensured over a long period.

The urethane polymer (B) may be polyurethane or the like obtained by reacting a chain extender such as polyamine, or the urethane polymer may contain a sulfur atom. In a case where the urethane polymer (B) contains a sulfur atom, the polyol compound may partially or fully correspond to one selected from the group consisting of polythiol and sulfur-containing polyol.

The weight-average molecular weight of the urethane polymer (B) is preferably 30000 or more and 1000000 or less, more preferably 50000 or more and 500000 or less, further preferably 80000 or more and 350000 or less. The weight-average molecular weight of the urethane polymer (B) is herein a weight-average molecular weight in terms of standard polystyrene as measured by gel permeation chromatography (GPC).

### (Mass rate between components (A) and (B))

The mass rate (A/B) of the acrylic-based polymer (A) to the urethane polymer (B) is preferably 1/5 or more and 10/1 or less. With the mass rate (A/B) in the above-mentioned range, not only flexibility and mechanical strength can be improved, but also deterioration in transparency over time can be prevented. The mass rate (A/B) is more preferably 1/4 or more and 5/1 or less, further preferably 1/2 or more and 2/1 or less from the viewpoint of not only allowing flexibility and mechanical strength to be improved, but also allowing excellent transparency to be kept over a long period, and is still further preferably 1/2 or more and 4/5 or less flexibility, from the viewpoint of mechanical strength.

The resin composition of the present invention may comprise any resin component as a resin component, other than the acrylic-based polymer (A) and the urethane polymer (B), as long as the effects of the present invention are exerted. The amount of such any resin component may be herein small. Furthermore, the resin composition preferably comprises no resin component other than the acrylic-based polymer (A) and the urethane polymer (B).

Specifically, the total amount of the acrylic-based polymer (A) and the urethane polymer (B) is preferably 90% by mass or more based on the total amount of the resin comprised in the resin composition. With the content of 90% by mass or more, a resin construct such as a resin film formed from the resin composition can be improved in flexibility and mechanical strength, and also transparency can be ensured easily. The total amount of the components (A) and (B) is more preferably 95% by mass or more, further preferably 97% by mass or more, most preferably 100% by mass based on the total amount of the resin.

The resin composition of the present invention may appropriately comprise a known additive used in combination with the acrylic resin and the urethane resin. Specific examples include an ultraviolet absorbing agent, an infrared absorbing agent, an antioxidant, a light stabilizer, an adhesion force modifier, a pigment, a dye, a fluorescent brightener, and a crystal nucleating agent. For example, a polymerization initiator for use in polymerization of the acrylic-based polymer (A) may also remain in the resin composition, as described below.

The resin composition of the present invention may also be diluted by a solvent and thus used in the form of a diluted liquid. For example, the solvent for use in synthesis of the acrylic-based polymer (A) may be used as a portion or the entire of a dilution solvent.

While a common resin composition, when laminated on glass and used, for example, used in an interlayer film for laminated glass described below, often comprises a plasticizer in order to allow flexibility to be ensured, the resin composition of the present invention enables flexibility to be ensured by combination use of the acrylic-based polymer (A) and the urethane polymer (B) even when comprises no plasticizer. The resin composition, which comprises no plasticizer, can prevent clouding on a resin material such as organic glass, caused by transfer of any plasticizer, even when laminated on an organic material such as organic glass and used.

### (Phase separation structure)

The resin composition of the present invention preferably has a phase separation structure formed from the acrylic-based polymer (A) and the urethane polymer (B). In the phase separation structure, a phase formed from the acrylic-based polymer (A) and a phase formed from the urethane polymer (B) are separated. The phase separation structure may be any structure, may be, for example, a sea-island structure, a bicontinuous structure, or a layered structure, and is preferably a sea-island structure. In the case of the sea-island structure, the urethane polymer (B) may constitute the sea portion and the acrylic-based polymer (A) may constitute the island portion. With the urethane polymer (B) corresponding to the sea portion and the acrylic-based polymer (A) corresponding to the island portion, mechanical strength such as tensile strength can be ensured sufficiently. The sea-island structure may be in the form of a so-called salami structure where a resin other than the resin forming the island portion is incorporated into the island portion.

The average longer size with respect to the island portion in the sea-island structure formed from the acrylic-based polymer (A) and the urethane polymer (B) is preferably 1 µm or more and 100 µm or less, more preferably 3 µm or more and 50 µm or less, further preferably 4 µm or more and 30 µm or less. The size of the island portion is thus relatively small, to allow the phase separation structure to be fine, thereby barely causing reflection and refraction to occur at an interface between phases, resulting in an enhancement in transparency of the resin composition.

The aspect rate represented by the average longer size relative to the average shorter size is not particularly limited, and is, for example, 2 or more and 500 or less, more preferably 5 or more and 300 or less, further preferably 15 or more and 200 or less.

The longer size and the shorter size are determined by staining a specimen of the resin composition with osmium, thereafter preparing an ultrathin section by a cryomicrotome, and performing measurement with a transmission-type electron microscope. The longer size refers to the length of the longest portion in such each island portion in microscope observation, and the shorter size refers to the length of such each island portion in measurement perpendicular to the longer size. The average longer size and the average shorter size are each the average value in measurement of the respective sizes of any 20 of such island portions.

### [Method for preparing resin composition]

The method for preparing the resin composition of the present invention may involve, for example, mixing the acrylic-based polymer (A) and the urethane polymer (B) synthesized in advance (hereinafter, also referred to as "first method").

The acrylic-based polymer (A) may also be prepared by synthesis in the presence of the urethane polymer (A). In other words, the resin composition may also be prepared by mixing the urethane polymer (A) and a monomer component for forming the acrylic-based polymer (A) to obtain a mixture thereof, and thereafter polymerizing the monomer component in the mixture to thereby synthesize the acrylic-based polymer (A) (hereinafter, also referred to as "second method").

The resin composition is preferably prepared by the second method. According to the second method, the acrylic-based polymer (A) and the urethane polymer (B) are in the state of being properly mixed in the resin composition and thus a relatively fine phase separation structure is easily formed to result in an easy enhancement in transparency.

The monomer component for forming the acrylic-based polymer (A) may be polymerized in the presence of a polymerization initiator. Accordingly, the second method may involve further adding a polymerization initiator to the mixture comprising the urethane polymer (B) and the monomer component for forming the acrylic-based polymer (A), and polymerizing the monomer component in the mixture.

The acrylic-based polymer (A) can be synthesized by polymerizing the monomer component by a free radical polymerization method, a living radical polymerization method, or the like, but not particularly limited thereto. The polymerization initiator here used may be, for example, an organic peroxide-based polymerization initiator or an azo-based polymerization initiator in a free radical polymerization method. An organotellurium polymerization initiator or the like may be used in a living radical polymerization method. When polymerization is made, a chain transfer agent may be used in addition to the polymerization initiator. Polymerization may also be made by irradiation with active energy ray, and in this case, the polymerization initiator here used may be a photo-polymerization initiator.

The acrylic-based polymer may be obtained by polymerization such as a solution polymerization method or a suspension polymerization method, or may be obtained by polymerization with active energy ray, as described above, and is preferably obtained by a solution polymerization method or polymerization with active energy ray and among them is preferably obtained by a solution polymerization method. Accordingly, it is preferable in the second method to synthesize the acrylic-based polymer (A) by polymerizing the monomer component for forming the acrylic-based polymer (A) in the state where the monomer component and the urethane polymer (B) are dissolved in a solvent.

The solvent is not particularly limited, and examples thereof include aliphatic hydrocarbon-based solvents such as n-pentane, n-hexane, n-heptane and cyclohexane, aromatic hydrocarbon-based solvents such as toluene, ester-based solvents such as ethyl acetate and n-butyl acetate, ketone-based solvents such as acetone, methyl ethyl ketone (MEK) and cyclohexanone, ether-based solvents such as tetrahydrofuran, and dimethylformamide (DMF) and N-methyl pyrrolidone.

The monomer component is preferably polymerized according to free radical polymerization with an organic peroxide-based polymerization initiator in a solution polymerization method. Examples of the organic peroxide-based polymerization initiator include cumene hydroperoxide, benzoyl peroxide, lauroyl peroxide, octanoyl peroxide, stearoyl peroxide, o-chlorobenzoyl peroxide, acetyl peroxide, t-butyl hydroperoxide, t-butyl peroxyacetate, t-butyl peroxyisobutyrate, 3,5,5-trimethylhexanoyl peroxide, pivaloyl (tert-butyl) peroxide, t-butyl peroxy-2-ethylhexanoate, and di-t-butyl peroxide.

The amount of the polymerization initiator compounded is preferably 0.05 parts by mass or more and 6 parts by mass or less, more preferably 0.2 parts by mass or more and 4 parts by mass or less based on 100 parts by mass of the monomer component for forming the acrylic-based polymer (A). With the amount of the polymerization initiator compounded equal to or more than the lower limit, polymerizing ability of the monomer component can be improved. With the amount equal to or less than the upper limit value, polymerizing ability commensurate with the amount compounded can be exhibited.

The polymerization temperature and the polymerization time in the free radical polymerization are not particularly limited, and are, for example, 40 to 110°C and 1 to 24 hours, preferably 60 to 85°C and 3 to 12 hours.

In a case where the resin composition of the present invention comprises at least any of a resin component other than the acrylic-based polymer (A) and the urethane polymer (B), and an additive, such resin component and/or additive may be mixed with such a component (A) (or the monomer component for forming the component (A)) and such a component (B) at any stage. For example, in the second method, such a resin component other than the acrylic-based polymer (A) and the urethane polymer (B), and such an additive may be mixed with a mixture of the monomer component for forming the acrylic-based polymer (A) and the urethane polymer (B), before synthesis of the acrylic-based polymer (A), or may be mixed with a mixture of the acrylic-based polymer (A) and the urethane polymer (B), after the synthesis.

### [Resin film]

The resin composition of the present invention may be used in any form, and is preferably used in the form of a film. In other words, the present invention provides a resin film formed of the resin composition, as a preferable aspect. The resin composition comprises a mixture of the acrylic-based polymer (A) using a specified monomer component, and the urethane polymer (B), as described above. Accordingly, the resin film of the present invention can be not only improved in flexibility and mechanical strength, but also improved in transparency over a long period. Herein, the resin film widely refers to not only a case of a single resin film, but also a case where a resin film is, for example, laminated on or covered with other member and thus is layered or film-shaped, and also refers to a relatively thick resin film commonly called a sheet.

The thickness of the resin film formed of the resin composition of the present invention may be appropriately selected depending on the application and the like, and is, for example, 100 µm or more and 2000 µm or less. The thickness of the resin film is preferably 250 µm or more and 900 µm or less. With the thickness of the resin film in such a range, the resin film can be suitably used in, for example, an interlayer film for laminated glass.

The resin film of the present invention may be of a single layer, or may form a multilayer film. The multilayer film may have at least one layer of the resin film of the present invention. In other words, the multilayer film may be a laminate of the resin film formed from the resin composition of the present invention, and a resin film formed from a composition other than the resin composition of the present invention. The multilayer film may also be laminate having two or more layers of the resin film formed from the resin composition of the present invention, and also in this case, the laminate may have a resin film formed from a composition other than the resin composition of the present invention.

The resin film of the present invention may be used in an application where transparency, light permeability, and the like are demanded, may be used for a transparent protective film used in protection of an optical member and the like, a film for an optical member, forming a portion of an optical member, a resin film for glass, used for glass, an adhesive film, a pressure-sensitive adhesive film, and the like, and is preferably used for a resin film for glass.

The resin film of the present invention, when used in a resin film for glass, may be provided on at least one surface of glass. The resin film of the present invention may be of a single layer, the resin film as a single layer being laminated on a glass surface, or may be laminated in the form of a multilayer film on a glass surface. The multilayer film is preferably placed at a position where the resin film of the present invention is in contact with glass, and thus directly laminated on the glass, but is not required to be directly laminated.

The resin film of the present invention is particularly preferably used in an interlayer film for laminated glass. In other words, the resin film of the present invention, and the multilayer film comprising the resin film of the present invention are each preferably disposed between a pair of glass members and used for an interlayer film which allows the pair of glass members to adhere. The resin composition of the present invention may be used in any form other than a film, as described above.

### (Method for producing resin film)

The resin film of the present invention may be produced by extrusion, press forming, or the like of the resin composition. The resin film of the present invention may also be produced by a forming method by coating a release sheet or the like with the resin composition or a diluted liquid thereof and drying the resultant. In a case where the thickness of the resin film is insufficient by one film formation in a case of formation by coating or the like, the resin film may be obtained in the form of one resin film by making a plurality of films and stacking the plurality of films for integration due to compression bonding or the like.

The resin film may also be formed with synthesis of the acrylic-based polymer (A) due to polymerization of the monomer component for forming the acrylic-based polymer. Specifically, a mixture comprising the urethane polymer (B) and the monomer component for forming the acrylic-based polymer (A) may be formed into a film and the monomer component may be polymerized with the film being kept to thereby cure the mixture, thereby forming a resin film comprising the resin composition comprising the urethane polymer (B) and the acrylic-based polymer (A).

In a case where the multilayer film is obtained, the multilayer film may be obtained as one multilayer film by stacking a plurality of films comprising the resin film of the present invention, for integration due to compression bonding or the like, or the multilayer film may be produced by any other method.

### [Glass laminate]

The resin film of the present invention is preferably used for glass, as described above, namely, the present invention also provides a glass laminate comprising a glass member and a resin film, as a preferable aspect.

The glass laminate of the present invention comprises at least one glass member, and the resin film of the present invention, in which the resin film may be provided on at least one surface of the glass member. The resin film of the present invention may be of a single layer, the resin film as a single layer being laminated on the glass member, or a multilayer film comprising the resin film of the present invention may be laminated on the glass member, as described above. The multilayer film is preferably placed at a position where the resin film of the present invention is in contact with glass, and thus directly laminated on the glass, but may not be directly laminated.

The resin composition of the present invention can be improved in adhesiveness to glass, and thus can be laminated on the glass member at a high adhesion force. The glass member can be allowed to adhere to other member with the resin film laminated on the glass member or the multilayer film being interposed therebetween.

The glass laminate is preferably laminated glass. The laminated glass comprises the resin film of the present invention, and a pair of opposed glass members, in which the resin film of the present invention is disposed between the pair of glass members. The resin film of the present invention in the laminated glass may have a single layer structure between the pair of glass members, and in this case, the pair of glass members may adhere to the resin film of the present invention and thus be integrated.

The resin film of the present invention may form the multilayer film between the pair of glass members. In this case, the pair of glass members may adhere to the multilayer film and thus be integrated. The resin film of the present invention may be placed at a position so as to be in contact with such a glass member and thus be directly laminated on such a glass member, or may not be directly laminated on such a glass member, but is preferably directly laminated.

The resin composition of the present invention can be improved in adhesiveness to glass, and thus the resin film formed of the resin composition of the present invention can be used for an interlayer film for laminated glass to allow the pair of glass members to adhere at a high adhesion force.

The glass member in the glass laminate is selected from the group consisting of inorganic glass and organic glass. Similarly, each of the pair of glass members in the laminated glass is any selected from the group consisting of inorganic glass and organic glass. The pair of glass members in the laminated glass are each preferably inorganic glass or organic glass, each more preferably inorganic glass, and one thereof may be inorganic glass and another thereof may be organic glass.

The inorganic glass is not particularly limited, and examples thereof include various glass plates of float plate glass, reinforced glass, colored glass, polished plate glass, template glass, wire plate glass, lined plate glass, ultraviolet absorbing plate glass, infrared reflection plate glass, infrared absorbing plate glass, green glass, and the like. The inorganic glass may be, for example, surface-treated. The thickness of the inorganic glass is not particularly limited, and is preferably 0.1 mm or more, further preferably 1.0 mm or more, and preferably 5.0 mm or less, further preferably 3.2 mm or less.

The organic glass is not particularly limited, and examples thereof include various organic glass plates such as a polycarbonate plate, a methacrylate plate such as polymethyl methacrylate plate, an acrylonitrile-styrene copolymer plate, an acrylonitrile-butadiene-styrene copolymer plate, a poly ester plate, a fluororesin plate, a polyvinyl chloride plate, a chlorinated polyvinyl chloride plate, a polypropylene plate, a polystyrene plate, a polysulfone plate, an epoxy resin plate, a phenol resin plate, an unsaturated polyester resin plate, and a polyimide resin plate. The organic glass may be appropriately surface-treated.

Among these described above, a polycarbonate plate is preferable from the viewpoint of being excellent in transparency, impact resistance, and burning resistance, and a methacrylate plate such as a polymethyl methacrylate plate is preferable and, among these, polycarbonate plate is preferable, from the viewpoint of being high in transparency and excellent in weather resistance and mechanical strength.

A specific thickness of the organic glass is not particularly limited, and is preferably 0.1 mm or more, further preferably 0.3 mm or more, and preferably 5.0 mm or less, further preferably 3.0 mm or less.

The glass laminate and the laminated glass of the present invention can be used in various fields. Specifically, the glass laminate and the laminated glass are used in window glass for wheeled vehicles such as automobiles and trains, various vehicles such as marine vessels and airplanes, various architectural structures such as buildings, condominium buildings, detached houses, halls, and gymnastic halls, working machines for cutting, polishing, and the like, or constructing machines such as shovels and cranes.

### [Method for producing glass laminate]

A glass laminate where a resin film or a multilayer film is provided on one surface of a glass member may be produced by placing the resin film or the multilayer film of the present invention on a surface of a glass member, and performing adhesion to the glass member due to thermocompression bonding or the like.

The laminated glass can be produced by placing the resin film of the present invention, produced in advance, between a pair of glass members, and performing thermocompression bonding or the like. In a case where the interlayer film in the laminated glass of the present invention is a multilayer film, the multilayer film may be produced in advance and the multilayer film may be placed between the pair of glass members. A plurality of the resin films may be stacked between the pair of glass members to integrate the plurality of the resin films, thereby providing a multilayer film, and the pair of glass members may be integrated with the multilayer film being interposed therebetween.

When the laminated glass is produced, any air remaining between the pair of glass members may be, if necessary, subjected to degassing after placing the resin film, the multilayer film, or a plurality of the resin films between the pair of glass members and before thermocompression bonding. The method for degassing is not particularly limited, and may be performed by passing through a pressing roll or charging into a rubber bag and evacuation under reduced pressure.

Temporary adhesion may be performed before thermocompression bonding. Such temporary adhesion may be performed by, for example, placing the resin film, the multilayer film, or a plurality of the resin films between the pair of glass members and pressing the resultant at a relatively low pressure with, if necessary, heating. Such temporary adhesion may be performed by, for example, a vacuum laminator. Such temporary adhesion may be performed after degassing or together with degassing in a case where degassing is performed.

The method for thermocompression bonding is not particularly limited, and pressure may be applied with heating of the resin film or the like placed between the pair of glass members. The heating temperature is preferably 60°C or more and 150°C or less, more preferably 70°C or more and 120°C or less. The pressure is preferably 0.4 MPa or more and 1.5 MPa or less, more preferably 0.5 MPa or more and 1.3 MPa or less. The pressure here mentioned is an absolute pressure. Examples of such thermocompression bonding include a method with an autoclave and a method with hot pressing, and a method with an autoclave is preferable.

### Examples

The present invention is described in more detail with reference to Examples, but the present invention is not limited to these Examples at all.

The measurement method and the evaluation method of each physical property value in the present invention are as follows.

### <Glass transition temperature (Tg) of acrylic-based polymer (A)>

A polymer was synthesized with the same monomer component at the same monomer rate as in each of the acrylic-based polymers (A) in Examples and Comparative Examples, and the glass transition temperature (Tg) of the polymer was measured and defined as the glass transition temperature (Tg) of the acrylic-based polymer (A). The polymerization for synthesizing the polymer was performed in the presence of a polymerization initiator in the same polymerization conditions as in Examples described below. The glass transition temperature (Tg) was determined with detection of the glass transition temperature (Tg) by performing viscoelasticity measurement with a dynamic viscoelasticity measurement apparatus (apparatus name "DVA-200", manufactured by IT Keisoku Seigyo Co., Ltd.) in conditions described herein to measure the shear storage elastic modulus and read the peak temperature at a loss tangent tan δ.

### <Observation and size measurement of sea-island structure>

A sample of the resin composition was stained with osmium, and thereafter an ultrathin section (thickness 70 µm) was made by a cryomicrotome and subjected to measurement by observation with a transmission-type electron microscope.

### <Transmission-type electron microscope>

Apparatus: "JEM-2100" manufactured by JEOL Ltd.
Acceleration voltage: 200 Kv

### <Cryomicrotome>

Apparatus: "ULTRACUT FC7" manufactured by LEICA

The data obtained was analyzed by image analysis software "WinROOF 2015", and the length was measured to thereby measure the size of the island portion.

### <Measurement of haze>

After any dirt on a surface of each laminated glass sample (100 mm × 100 mm) produced in Examples and Comparative Examples was sufficiently wiped off by ethanol, the haze (HAZE) value was measured with a haze meter (trade name "TB-H3DPK", manufactured by Tokyo Denshoku Co., Ltd.). The haze value was used and rated according to the following evaluation criteria. Each position subjected to the measurement was marked so that the haze value at the same position was measured also in a moist-heat resistance test.
A: a haze value of less than 1
B: a haze value of 1 or more and less than 3
C: a haze value of 3 or more

### <Moist-heat resistance test>

Each laminated glass sample produced in Examples and Comparative Examples was left to still stand in a constant temperature and humidity oven (product name "PL-3KP", manufactured by Espec Corp) in conditions of 85°C and a humidity of 85% RH for 500 hours. Thereafter, the haze value was measured by the same method as the above haze measurement, and rated according to the same evaluation criteria.

### <Tensile test>

A sample obtained by punching each resin film obtained in Examples and Comparative Examples by #4 dumbbell was subjected to a tensile test in a condition of a tensile speed of 200 mm/min (distance between chucks 50 mm) with a tensile tester (trade name "UTA-500", manufactured by ORIENTEC) in conditions of 23°C and a humidity of 50% RH, to measure the stress at fracture point. The stress at fracture point measured was used and rated according to the following evaluation criteria.
A: a stress at fracture point of 20 MPa or more
B: a stress at fracture point of 10 MPa or more and less than 20 MPa
C: a stress at fracture point of less than 10 MPa

Each component used in Examples and Comparative Examples is as follows.

### <Monomer component forming acrylic-based polymer (A)>

### (Acrylic-based monomer (A1))

MEDOL-10: (2-methyl-2-ethyl-1,3-dioxoran-4-yl)methyl acrylate, product name "MEDOL-10", manufactured by Osaka Organic Chemical Industry Ltd.

4-HBA: 4-hydroxybutyl acrylate, manufactured by Nihon Kasei Co., Ltd.

M-5300: ω-carboxy-polycaprolactone monoacrylate, product name "M-5300", manufactured by Toagosei Co., Ltd.

H-ABEI: 1,2-ethanediol-1-acrylate-2-(N-butylcarbamate): product name "Viscoat #216", manufactured by Osaka Organic Chemical Industry Ltd., CAS No.:63225-53-6

### (Acrylic-based monomer (A2))

2-EHA: 2-ethylhexyl acrylate, manufactured by Nippon Shokubai Co., Ltd.

IBOA: isobornyl acrylate, manufactured by Nippon Shokubai Co., Ltd.

BzA: benzyl acrylate, manufactured by FUJIFILM Wako Pure Chemical Corporation

### <Urethane polymer (B)>

Thermoplastic polyurethane (TPU), reaction product of aliphatic isocyanate and polyether polyol (PTMEG), product name "AG8451" manufactured by Lubrizol Corporation

The weight-average molecular weight (Mw) of the thermoplastic polyurethane was 145319.

### <Polymerization initiator>

Pivaloyl (tert-butyl) peroxide, product name "Perbutyl PV" manufactured by NOF Corporation

### <Solvent>

Ethyl acetate: manufactured by Godo Co., Ltd.
Toluene: manufactured by Godo Co., Ltd.
Ethanol: manufactured by FUJIFILM Wako Pure Chemical Corporation

### [Example 1]

### (Preparation of resin composition)

A 400-mL separable flask equipped with a stirring machine, a condenser tube, a nitrogen introduction tube, a thermometer and an initiator feed port and placed in a hot-water bath was prepared. The hot-water bath was installed at 80°C, and the urethane polymer (B) dissolved in ethyl acetate was loaded into the separable flask. The concentration of the urethane polymer (B) in such a solution in ethyl acetate was 25% by mass. Next, the hot-water bath was installed at 70°C, and thereafter the monomer component for forming the acrylic-based polymer (A), mixed at a compounding rate shown in Table 1, was loaded into a reactor, and purged with nitrogen for 30 minutes to thereby remove oxygen in the container. Here, the amounts of compounding of the acrylic-based polymer (A) obtained from the monomer component and the urethane polymer (B), expressed by parts by mass, were adjusted so as to be at proportions shown in Table 1. The substantially total amount of the monomer component was synthesized to the acrylic-based polymer (A), and thus the total amount of the monomer component was regarded as the amount of the acrylic-based polymer (A), expressed by parts by mass.

Next, a reaction was performed at 70°C for 6 hours with addition of a solution of a polymerization initiator in ethyl acetate into a reaction container in several portions. The polymerization initiator was here sequentially added at the start of the reaction and every lapse of 1 hour thereafter. The total amount of the polymerization initiator loaded was 0.77 parts by mass based on 100 parts by mass of the monomer component forming the acrylic-based polymer (A). After completion of the reaction, the temperature of the hot-water bath was raised to keep boiling of a reaction liquid for 1 hour, thereby completely decomposing the polymerization initiator in the reaction system. Thereafter, ethyl acetate was added to the reaction container, the temperature was dropped to 23°C, and a polymer solution was recovered. The polymer solution obtained was allowed to pass through a filter cloth for removal of a floating object and the like.

Ethanol and toluene were added to the polymer solution obtained above, and the solution was adjusted so that the solid content fraction was 15% by mass and the mixing rate (mass rate) in the solvent satisfied ethyl acetate : ethanol: toluene = 80:10:10, thereby obtaining a diluted product of the resin composition.

### (Production of resin film)

A PET release film (trade name "PET50×1-C", manufactured by Nippa Co., Ltd.) was tightly attached to an upper surface of coating glass by ethyl acetate so that a release treatment surface thereof faced up. The release treatment surface of the PET release film was coated with the diluted liquid of the resin composition, obtained above, so that a predetermined thickness was achieved, and thereafter the solvent was removed by drying with a sequential rise of temperature at 30°C for 20 minutes, at 50°C for 20 minutes, at 80°C for 20 minutes, and at 110°C for 20 minutes, to form a film of the resin composition, on the PET release film. The film formed was peeled from the PET release film, and a plurality of such films were laminated, to thereby obtain a resin film having a thickness of 700 µm. The resin film was stained as described above to provide an ultrathin section and the section was observed, and thus the resin composition forming the resin film was found to have a sea-island structure, have an average shorter size and an average longer size, with respect to the island, of 130 nm and 10 µm, respectively, and have an aspect rate of 77.

### (Production of laminated glass)

The resin film obtained above was cut to a predetermined size, and laminated between two sheets of float glass (manufactured by Hiraoka Special Glass Mfg. Co., Ltd., a size of 100 mm × 100 mm, thickness 2.0 mm), and pressed with a vacuum laminator (trade name "MVLP500/600", manufactured by Meiki Co., Ltd.) at 60 to 80°C and a set pressure of 100 kPa for 10 minutes, to obtain a laminate of temporary adhesion.

The laminate of temporary adhesion, obtained above, was heated and pressurized with an autoclave (product name "HP5050MAH-H14", manufactured by Kyosin Engineering Corporation) and thus thermocompression bonded. Specifically, the following conditions were adopted. The temperature and the pressure were raised from 20°C and ordinary pressure and kept in conditions of 80°C and 0.6 MPa (absolute pressure) for 25 minutes, to perform thermocompression bonding. Next, the temperature and the pressure were dropped to 20°C and ordinary pressure, and laminated glass produced was taken out from the autoclave. Thereafter, a portion of an interlayer film (resin film), protruded from the two glass plates, was cut off, to provide a laminated glass sample for use in various tests.

### [Example 2]

The same manner as in Example 1 was performed except that compounding of the monomer component for forming the acrylic-based polymer (A) loaded into the reactor in Preparation of resin composition was as shown in Table 1.

### [Example 3]

The same manner as in Example 1 was performed except that compounding of the monomer component for forming the acrylic-based polymer (A) loaded into the reactor in Preparation of resin composition was as shown in Table 1.

### [Example 4]

The same manner as in Example 1 was performed except that the amount of the monomer component loaded into the reactor was adjusted so that the proportions of the acrylic-based polymer (A) obtained from the monomer component and the urethane polymer (B) in Preparation of resin composition, expressed by parts by mass, were as shown in Table 1.

### [Example 5]

The same manner as in Example 1 was performed except that the amount of the monomer component loaded into the reactor was adjusted so that compounding of the monomer component for forming the acrylic-based polymer (A) loaded into the reactor was as shown in Table 1 and the proportions of the acrylic-based polymer (A) obtained from the monomer component and the urethane polymer (B), expressed by parts by mass, were as shown in Table 1, in Preparation of resin composition.

### [Example 6]

The same manner as in Example 1 was performed except that the amount of the monomer component loaded into the reactor was adjusted so that compounding of the monomer component for forming the acrylic-based polymer (A) loaded into the reactor was as shown in Table 1 and the proportions of the acrylic-based polymer (A) obtained from the monomer component and the urethane polymer (B), expressed by parts by mass, were as shown in Table 1, in Preparation of resin composition.

### [Comparative Example 1]

The same manner as in Example 1 was performed except that compounding of the monomer component for forming the acrylic-based polymer (A) loaded into the reactor in Preparation of resin composition was as shown in Table 1.

### [Comparative Example 2]

The same manner as in Example 1 was performed except that only ethyl acetate was loaded instead of the urethane polymer (B) dissolved in ethyl acetate and thereafter the monomer component for forming the acrylic-based polymer (A) loaded into the reactor was compounded as shown in Table 1, in Preparation of resin composition. The resin composition obtained included only the acrylic-based polymer (A).

### [Comparative Example 3]

The same manner as in Example 1 was performed except that no resin composition was prepared and the release treatment surface of the PET release film was coated with a solution of the urethane polymer (B) in ethyl acetate (solid content concentration 25% by mass) instead of the resin composition.

**[Table 1]**

| | | Example | | | | | | Comparative Example | | |
|---|---|---|---|---|---|---|---|---|---|---|
| | | 1 | 2 | 3 | 4 | 5 | 6 | 1 | 2 | 3 |
| Monomer component (parts by mass) | MEDOL-10 | - | - | 15.51 | - | 11.36 | - | - | - | - |
| | 4-HBA | 40.00 | - | 20.00 | 40.00 | 30.00 | - | - | 100 | - |
| | M-5300 | - | 20.00 | - | - | - | - | - | - | - |
| | H-ABEI | - | - | - | - | - | 38.13 | - | - | - |
| | 2-EHA | 38.58 | 51.18 | 40.52 | 38.58 | 36.49 | 36.99 | 68.84 | - | - |
| | IBOA | 5.82 | 12.47 | 0.31 | 5.82 | - | - | 21.15 | - | - |
| | BzA | 15.61 | 16.35 | 23.66 | 15.61 | 22.16 | 24.87 | 10.01 | - | - |
| Polymeriza tion initiator (parts by mass) | Perbutyl PV | 0.77 | 0.77 | 0.77 | 0.77 | 0.77 | 0.77 | 0.77 | 0.77 | - |
| Acrylic-based polymer (A) | Acrylic-based monomer (A1) (parts by mass) (based on 100 parts by mass of entire monomer component) | 40 | 20 | 35.5 | 40 | 41.3 | 38.1 | 0 | 100 | 0 |
| | Glass transition temperature (Tg) | -30°C | -20°C | -30°C | -30°C | -20°C | -10°C | -20°C | -16°C | - |
| Parts by mass | Acrylic-based polymer (A) | 67 | 67 | 67 | 33 | 200 | 100 | 67 | 100 | - |
| | Urethane polymer (B) | 100 | 100 | 100 | 100 | 100 | 100 | 100 | - | 100 |
| Evaluation items | Transparency (HAZE) | A | A | A | A | A | A | A | A | B |
| | Moist-heat resistance at 85°C and 85% RH (HAZE after test for 500 hours) | A | A | B | B | B | B | C | A | C |
| | Tensile stress (stress at fracture point) | A | A | A | A | B | B | B | C | A |

It was found from each of Examples above that the monomer component forming the acrylic-based polymer (A) in the resin composition comprising the acrylic-based polymer (A) and the urethane polymer (B) having a specified functional group (X) enabled the haze value after the moist-heat resistance test to be improved and enabled favorable transparency to be kept over a long period. Moreover, the stress at fracture point was increased, and flexibility and mechanical strength were excellent.

On the other hand, Comparative Example 1 where, although the acrylic-based polymer (A) and the urethane polymer (B) were used in combination, the monomer component forming the acrylic-based polymer (A) comprised no specified functional group (X) caused the haze value after the moist-heat resistance test to be deteriorated and had a difficulty in exhibiting favorable transparency kept over a long period. Moreover, Comparative Examples 2 and 3, where the acrylic-based polymer (A) singly or the urethane polymer (B) singly was used, did not allow the stress at fracture point and the haze value to be favorable, and had a difficulty in imparting excellent flexibility and strength and also exhibiting favorable transparency kept over a long period.

## Claims

1. A resin composition comprising an acrylic-based polymer (A) and a urethane polymer (B),
the acrylic-based polymer (A) being a polymer of a monomer component comprising an acrylic-based monomer (A1) having at least one functional group (X) selected from the group consisting of a hydroxy group, a carboxy group, a thiol group, an amino group, a group having an ether bond, a group having a urethane bond and a group having an amide bond.

2. The resin composition according to claim 1, wherein a mass rate (A/B) of the acrylic-based polymer (A) to the urethane polymer (B) is 1/5 or more and 10/1 or less.

3. The resin composition according to claim 1 or 2, wherein an amount of the acrylic-based monomer (A1) compounded is 1 part by mass or more based on 100 parts by mass of the monomer component forming the acrylic-based polymer (A).

4. The resin composition according to any one of claims 1 to 3, wherein a phase separation structure is formed by the acrylic-based polymer (A) and the urethane polymer (B).

5. The resin composition according to any one of claims 1 to 4, wherein a total content of the acrylic-based polymer (A) and the urethane polymer (B) is 90% by mass or more based on a total amount of a resin comprised in the resin composition.

6. The resin composition according to any one of claims 1 to 5, wherein a glass transition temperature (Tg) of the acrylic-based polymer (A) is 50°C or less.

7. The resin composition according to any one of claims 1 to 6, wherein the acrylic-based monomer (A1) comprises at least one selected from the group consisting of an acrylic-based monomer (A1) having a hydroxy group, an acrylic-based monomer (A1) having a carboxy group, an ether bond-containing acrylic-based monomer (A1), and a urethane bond-containing acrylic-based monomer (A1).

8. The resin composition according to any one of claims 1 to 7, wherein the acrylic-based monomer (A1) comprises an acrylic-based monomer (A1) having a hydroxy group or an acrylic-based monomer (A1) having a carboxy group.

9. The resin composition according to claim 7 or 8, wherein the acrylic-based monomer (A1) having a hydroxy group is a hydroxyalkyl (meth)acrylate, the acrylic-based monomer (A1) having a carboxy group is at least one selected from the group consisting of acrylic acid, methacrylic acid and ω -carboxy-polycaprolactone mono(meth)acrylate, the acrylic-based monomer (A1) having an ether bond is a cyclic ether group-containing (meth)acrylate, and the acrylic-based monomer (A1) having a urethane bond is 1,2-ethanediol-1-(meth)acrylate 2-(N-butylcarbamate).

10. The resin composition according to any one of claims 1 to 9, wherein the monomer component comprises a monofunctional acrylic-based monomer (A2) having no functional group (X), and the acrylic-based monomer (A2) comprises at least one selected from the group consisting of alkyl (meth)acrylate, alicyclic structure-containing (meth)acrylate and aromatic ring-containing (meth)acrylate.

11. The resin composition according to any one of claims 1 to 10, wherein the monomer component further comprises a monofunctional acrylic-based monomer (A2) having no functional group (X), and the acrylic-based monomer (A2) comprises alkyl (meth)acrylate.

12. The resin composition according to claim 11, wherein the acrylic-based monomer (A2) further comprises one of or both aromatic ring-containing (meth)acrylate and alicyclic structure-containing (meth)acrylate.

13. The resin composition according to any one of claims 1 to 12, wherein the urethane polymer (B) is thermoplastic polyurethane.

14. The resin composition according to any one of claims 1 to 13, wherein the urethane polymer (B) is aliphatic polyurethane.

15. The resin composition according to any one of claims 1 to 14, wherein the urethane polymer (B) is a reaction product of a polyisocyanate compound and a polyol compound, and the polyol compound comprises polyether polyol.

16. The resin composition according to any one of claims 1 to 15, wherein a weight-average molecular weight of the urethane polymer (B) is 30000 or more and 1000000 or less.

17. A resin film formed of the resin composition according to any one of claims 1 to 16.

18. The resin film according to claim 17, having a thickness of 250 µm or more and 900 µm or less.

19. A glass laminate comprising the resin film according to claim 17 or 18, and a glass member selected from the group consisting of inorganic glass and organic glass, wherein the resin film is provided on a surface of the glass member.

20. A glass laminate comprising the resin film according to claim 17 or 18, and a pair of opposed glass members each selected from the group consisting of any of inorganic glass and organic glass, wherein the resin film is placed between the pair of glass members.
